# FASCICULE DE BREVET EUROPEEN

(11) **EP 1 937 954 B1**
(45) Date de publication et mention de la délivrance du brevet: **10.02.2010**
(21) Numéro de dépôt: 06820223.3
(22) Date de dépôt: 17.10.2006
(51) Int. Cl.: F02K 1/34, F02K 1/38

(54) **TURBOMOTEUR A BRUIT DE JET ATTENUE**
TURBOSTRAHLTRIEBWERK MIT GEDÄMPFTEM STRAHLGERÄUSCH
TURBOJET ENGINE WITH ATTENUATED JET NOISE

(30) Priorité: 19.10.2005 FR 0510627
(43) Date de publication de la demande: 02.07.2008
(73) Titulaire: AIRBUS OPERATIONS (SAS), 31060 Toulouse (FR)
(72) Inventeur: PORTE, Alain, F-31770 Colomiers (FR)
(74) Mandataire: Bonnetat, Christian
(86) Numéro de dépôt international: PCT/FR2006/002326
(87) Numéro de publication internationale: WO 2007/045754

(56) Documents cités:
- EP-A- 1 004 759
- WO-A-02/29232
- WO-A-2005/021934

## Description

La présente invention concerne un turbomoteur à bruit de jet atténué, destiné à équiper un aéronef.

On sait que, à l'arrière d'un turbomoteur à double flux, le flux froid et le flux chaud s'écoulent dans le même sens vers l'aval dudit turbomoteur et entrent en contact l'un avec l'autre. Comme les vitesses desdits flux sont différentes l'une de l'autre, il en résulte des cisaillements fluides de pénétration entre lesdits flux, lesdits cisaillements fluides engendrant du bruit, appelé "bruit de jet" dans la technique aéronautique.

Pour atténuer un tel bruit de jet, on a déjà pensé à engendrer des turbulences à la frontière entre ledit flux chaud et ledit flux froid. C'est ainsi que l'on a déjà proposé de pratiquer des échancrures dans le bord de sortie du flux chaud, lesdites échancrures étant réparties à la périphérie dudit bord de sortie et chacune d'elles présentant généralement la forme au moins approximative d'un triangle, dont la base est confondue avec ledit bord de sortie et dont le sommet se trouve en avant de ce bord de sortie. Ces échancrures sont généralement appelées "chevrons" dans la technique aéronautique. Une autre technique pour atténuer le bruit de jet est décrite dans le document WO 02/29 232 A.

Ces chevrons connus sont efficaces pour atténuer le bruit de jet ; cependant, ils présentent l'inconvénient d'engendrer une traînée importante.

De plus, on doit constater que la réduction du bruit de jet n'est vraiment utile que lorsque l'aéronef équipé dudit turbomoteur est au voisinage du sol avec un régime dudit turbomoteur élevé, afin de ne pas importuner les personnes se trouvant dans un aéroport ou résidant au voisinage de celui-ci. En revanche, en phase de croisière à haute altitude, l'atténuation du bruit de jet n'a que peu d'importance.

Ainsi, en croisière, les performances de l'aéronef sont inutilement pénalisées par lesdits chevrons créant une augmentation de traînée.

L'objet de la présente invention est de remédier à cet inconvénient, en n'engendrant des turbulences à la frontière entre lesdits flux chaud et froid que lorsque l'atténuation de bruit de jet est réellement utile.

A cette fin, selon l'invention, le turbomoteur à double flux pour aéronef, comportant :
- une nacelle creuse présentant un axe longitudinal et comportant, à l'avant, une entrée d'air et, à l'arrière, une sortie d'air ;
- une soufflante disposée axialement dans ladite nacelle en regard de ladite entrée d'air et apte à engendrer le flux froid dudit turbomoteur ;
- un générateur disposé axialement dans ladite nacelle, en arrière de ladite soufflante, ledit générateur étant apte à engendrer le flux chaud axial dudit turbomoteur entouré par ledit flux froid et étant enfermé dans un capot de moteur ; et
- un capot interne de canal de soufflante entourant coaxialement ledit générateur de flux chaud, de façon :
   ■ à délimiter avec la nacelle un canal à section annulaire pour ledit flux froid, canal qui se termine par ladite sortie d'air de la nacelle ;
   ■ à délimiter avec ledit capot de moteur une chambre intermédiaire à section annulaire ; et
   ■ à converger par sa partie arrière avec la partie arrière dudit capot de moteur pour que les bords arrière respectifs de ces parties arrière forment le bord de l'orifice de sortie dudit flux chaud à la partie arrière de ladite chambre intermédiaire,
      est remarquable :
- en ce que, dans ladite partie arrière de ladite chambre intermédiaire, sont prévus des moyens de communication disposés autour dudit axe longitudinal et aptes à mettre ladite chambre intermédiaire en communication avec l'extérieur, au voisinage de la frontière entre ledit flux froid et ledit flux chaud ;
- en ce que sont prévues une pluralité de trappes agencées dans la partie arrière dudit capot de moteur, en étant réparties à la périphérie de cette dernière partie arrière ;
- en ce que lesdites trappes ne sont ouvertes que lorsque le régime dudit turbomoteur est supérieur à un seuil correspondant au moins au régime de croisière de l'aéronef ; et
- en ce que, en position ouverte, lesdites trappes prélèvent, sur ledit flux chaud, des jets d'air chaud individuels passant dans ladite chambre intermédiaire avant de sortir de celle-ci à travers lesdits moyens de communication en étant répartis autour dudit axe longitudinal.

Ainsi, dans les phases de vol dans lesquelles le régime du moteur est inférieur audit seuil, les trappes sont fermées et le turbomoteur de l'invention fonctionne comme un turbomoteur non pourvu de chevrons, sans atténuation du bruit de jet, ni augmentation de traînée.

En revanche, au décollage, le régime du turbomoteur est élevé et supérieur audit seuil, de sorte que les trappes sont ouvertes et prélèvent des jets individuels sur le flux chaud. Ces jets individuels, répartis à la périphérie de la partie arrière du capot moteur (en concordance avec la répartition desdites trappes), pénètrent dans ladite chambre et en ressortent par lesdits moyens de communication, en engendrant des turbulences à la frontière entre les flux chaud et froid, à la manière de chevrons. Ils entraînent donc une réduction du bruit de jet, accompagnée d'une augmentation de traînée.

On remarquera que, lorsque l'aéronef est en phase d'approche en vue d'un atterrissage (moteur à bas régime), mais que le pilote est obligé de remettre les gaz du fait que ledit atterrissage est momentanément impossible, le régime du moteur au moment de la remise des gaz est élevé et comparable à celui du décollage. Par suite, à une telle remise des gaz, les trappes sont ouvertes et le bruit de jet est atténué, ce qui est favorable puisqu'alors l'aéronef est proche du sol.

On remarquera de plus que, lorsque l'aéronef comporte une pluralité de turbomoteurs, dont au moins l'un est en panne, le régime des turbomoteurs en état de fonctionner est supérieur à leur régime normal pour compenser ladite panne et, dans ce cas, il est avantageux que lesdites trappes s'ouvrent pour atténuer le bruit engendré.

Lesdits moyens de communication peuvent comporter une pluralité d'ouvertures de communication individuelles réparties à la périphérie de la partie arrière de ladite chambre intermédiaire.

De telles ouvertures individuelles peuvent être spécifiquement pratiquées pour les besoins de la présente invention. Cependant, si, comme cela est décrit dans la demande de brevet français n° 05 09260 déposée le 12 septembre 2005 au nom de la demanderesse, à la périphérie dudit orifice de sortie du flux chaud, un seul desdits bords arrière dudit capot interne du canal de soufflante ou dudit capot de moteur est entaillé par des échancrures aptes à atténuer le bruit de jet du turbomoteur sans engendrer une traînée excessive, il est avantageux que lesdites échancrures constituent au moins en partie lesdits moyens de communication. De plus, pour optimiser le soufflage desdites échancrures, et donc améliorer l'atténuation du bruit de jet, il est préférable, dans le cas où chaque échancrure présente la forme au moins approximative d'un triangle comme indiqué ci-dessus, qu'un jet d'air chaud individuel débouche dans l'échancrure correspondante à travers un bord latéral de ladite échancrure.

Par ailleurs, si, de façon usuelle dans certains turbomoteurs, lesdits bords arrière du capot interne de canal de soufflante et du capot de moteur ménagent entre eux une fente, au moins des parties de ladite fente peuvent également constituer au moins en partie lesdits moyens de communication.

De préférence, à chaque trappe, est associé un système de fermeture et d'ouverture sensible à la valeur d'une grandeur physique caractérisant l'état dudit flux chaud. Ainsi, la fermeture et l'ouverture desdites trappes peuvent être automatique en fonction du régime du moteur.

Par exemple, un tel système de fermeture et d'ouverture peut comporter un ressort taré, agissant sur la trappe correspondante dans le sens de la fermeture. Ainsi, en choisissant le tarage approprié pour ce ressort, la trappe peut rester fermée lorsque la valeur de la pression dudit flux chaud est inférieure aux valeurs élevées que prend ladite pression aux régimes de moteurs élevés et être ouverte dans le cas inverse.

Cependant, de préférence, chaque système de fermeture et d'ouverture de trappe comporte un bilame se déclenchant pour une température du flux chaud correspondant au régime de décollage.

Dans un mode de réalisation avantageux, chaque trappe comporte une lame élastique apte à coopérer avec une ouverture pratiquée dans ladite partie arrière du capot de moteur, ladite lame élastique étant solidarisée de ladite partie arrière le long d'un bord de ladite ouverture et ledit bilame étant solidaire, d'un côté, de ladite partie arrière et, de l'autre côté, de ladite lame élastique.

De préférence, afin de ne pas créer d'obstacles dans l'écoulement du flux chaud (ce qui risquerait de dégrader les performances dudit turbomoteur), il est avantageux que lesdites trappes s'ouvrent en direction de ladite chambre intermédiaire.

Pour une raison semblable à la précédente, le système de fermeture et d'ouverture de chaque trappe se trouve avantageusement du côté de ladite chambre intermédiaire.

De ce dernier côté, chaque trappe peut être protégée par un carter ouvert vers l'arrière pour permettre auxdits jets d'air chaud d'atteindre lesdits moyens de communication.

Avantageusement, notamment afin de pouvoir régler l'inclinaison desdits jets d'air chaud par rapport au bord de l'orifice de sortie du flux chaud, on prévoit des moyens de guidage desdits jets d'air chaud en arrière desdites trappes. De tels moyens de guidage peuvent être constitués de parois, d'obstacles, etc ... Ils peuvent également être constitués par lesdits carters de protection des trappes.

Les figures du dessin annexé feront bien comprendre comment l'invention peut être réalisée. Sur ces figures, des références identiques désignent des éléments semblables.

La figure 1 représente, en coupe axiale schématique, un turbomoteur connu, destiné à être perfectionné par la présente invention.

Les figures 2 et 3 illustrent, schématiquement, le principe de la présente invention appliqué au turbomoteur de la figure 1.

Les figures 4 et 5 illustrent schématiquement, en vues respectivement semblables aux figures 2 et 3, une variante d'application de la présente invention au turbomoteur de la figure 1.

La figure 6 montre en perspective un exemple de réalisation des trappes utilisées dans la mise en oeuvre de la présente invention.

La figure 7 montre en perspective schématique la partie arrière du capot de moteur du turbomoteur correspondant aux figures 2 à 5, ladite partie arrière étant équipée d'une pluralité de trappes réparties à sa périphérie et protégées par des carters de protection.

La figure 8 illustre, en perspective agrandie de l'arrière, une trappe protégée par un carter de protection et équipée de moyens de guidage du jet d'air chaud.

La figure 9 illustre, également en perspective agrandie de l'arrière, une variante de réalisation desdits moyens de guidage associés aux trappes.

La figure 10 montre une variante de réalisation de l'invention, en vue semblable à la figure 7.

La figure 11 illustre la variante de réalisation de la figure 10, la partie arrière du capot interne de canal de soufflante étant représentée en superposition de ladite partie arrière du capot de moteur et comportant des chevrons.

Les figures 12 et 13 illustrent encore une autre variante de réalisation en vues comparables aux figures 10 et 11.

La figure 14 est une variante de réalisation de celle des figures 10 à 13.

La figure 15 représente, en coupe axiale schématique, un autre turbomoteur connu, différent de celui de la figure 1 et également destiné à être perfectionné par la présente invention.

Les figures 16 et 17 illustrent schématiquement, en vues respectivement semblables aux figures 2 et 3, le principe de la présente invention appliqué au turbomoteur de la figure 15.

Les figures 18 et 19 illustrent schématiquement, en vues respectivement semblables aux figures 16 et 17, une première variante d'application de la présente invention au turbomoteur de la figure 15.

La figure 20 montre, en vue semblable à la figure 11, un exemple de réalisation de la partie arrière du générateur de flux chaud du turbomoteur de la figure 15 utilisable dans la première variante des figures 18 et 19.

Les figures 21 et 22 illustrent schématiquement, en vues respectivement semblables aux figures 16 et 17, une seconde variante d'application de la présente invention au turbomoteur de la figure 15.

La figure 23 montre, en vue semblable à la figure 11, un exemple de réalisation de la partie arrière du générateur de flux chaud du turbomoteur de la figure 15 utilisable dans la seconde variante des figures 21 et 22.

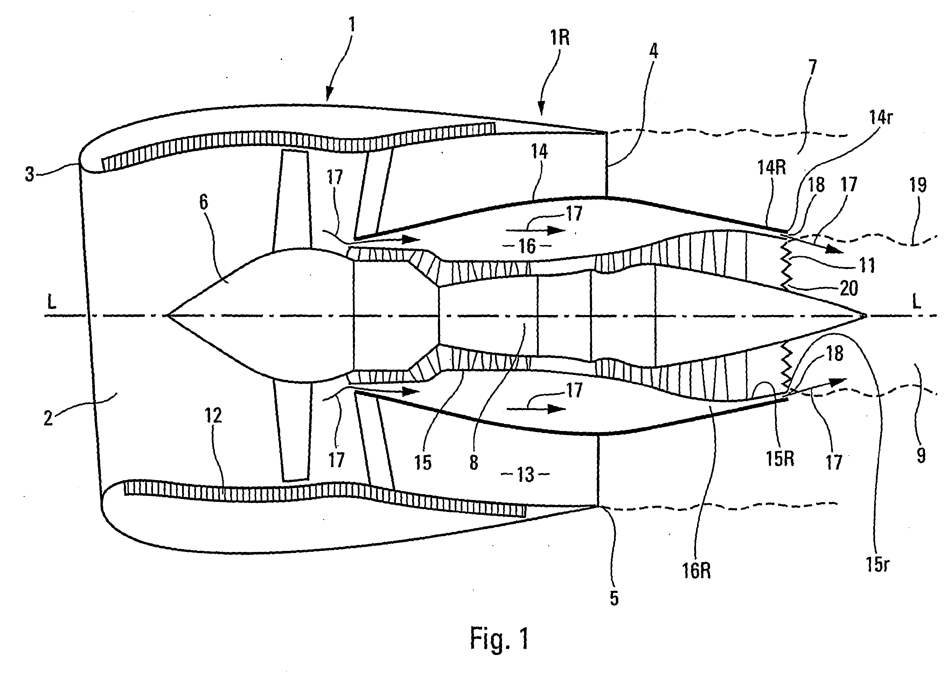

Le turbomoteur à double flux de type connu pour aéronef, montré par la figure 1, comporte une nacelle creuse 1, d'axe longitudinal L-L, comportant, à l'avant, une entrée d'air 2 pourvue d'un bord d'attaque 3 et, dans sa partie arrière 1 R, une sortie d'air annulaire 4 pourvue d'un bord de fuite 5.

A l'intérieur de ladite nacelle creuse 1, sont disposés axialement :
- une soufflante 6 dirigée vers l'entrée d'air 2 et apte à engendrer le flux froid 7 pour le turbomoteur ;
- un générateur central 8 comprenant, de façon connue et non représentée, des compresseurs à basse et haute pression, une chambre de combustion et des turbines à basse et haute pression, ledit générateur 8 engendrant le flux chaud axial 9 dudit turbomoteur entouré par ledit flux froid 7 et étant enfermé dans un capot de moteur 15 ;
- un capot interne de canal de soufflante 14 entourant ledit générateur de flux chaud 8 ; et
- des revêtements d'atténuation acoustique 12, destinés à absorber les bruits internes engendrés par la soufflante 6 et le générateur de flux chaud 8.

Le capot interne de canal de soufflante 14 délimite avec la nacelle 1 un canal de soufflante 13, à section annulaire, aboutissant à la sortie annulaire 4. Le flux froid 7 traverse le canal de soufflante 13 et sort du turbomoteur à travers ladite sortie annulaire 4.

De plus, le capot 14 délimite avec le capot de moteur 15 une chambre intermédiaire 16, à section annulaire, entourant ledit générateur central 8 et parcourue longitudinalement par un flux d'air 17 pour la ventilation dudit générateur central 8, le flux d'air 17 étant prélevé à l'avant sur le flux froid 7.

Les parties arrière respectives 14R et 1 5R desdits capots 14 et 15 convergent l'une vers l'autre et leurs bords arrière respectifs 14r et 15r forment le bord de l'orifice de sortie 11 du flux chaud 9 à la partie arrière 16R de la chambre intermédiaire 16, tout en ménageant entre eux une fente 18, à travers au moins des parties de laquelle s'échappe ledit flux d'air de ventilation 17.

Ainsi, à la sortie du turbomoteur connu représenté sur la figure, le flux chaud central 9 est entouré par le flux froid annulaire 7. Bien évidemment, à la frontière 19 entre ces deux flux, les fluides en contact ont des vitesses différentes, ce qui engendre, au moins en partie, le bruit dé jet décrit ci-dessus.

Pour atténuer ce bruit de jet, le bord de l'orifice de sortie 11 du flux chaud 9 est pourvu, de façon connue, d'échancrures 20 réparties à sa périphérie. Ces échancrures 20 traversent toute l'épaisseur des deux bords arrière 14r et 15r et engendrent une traînée importante.

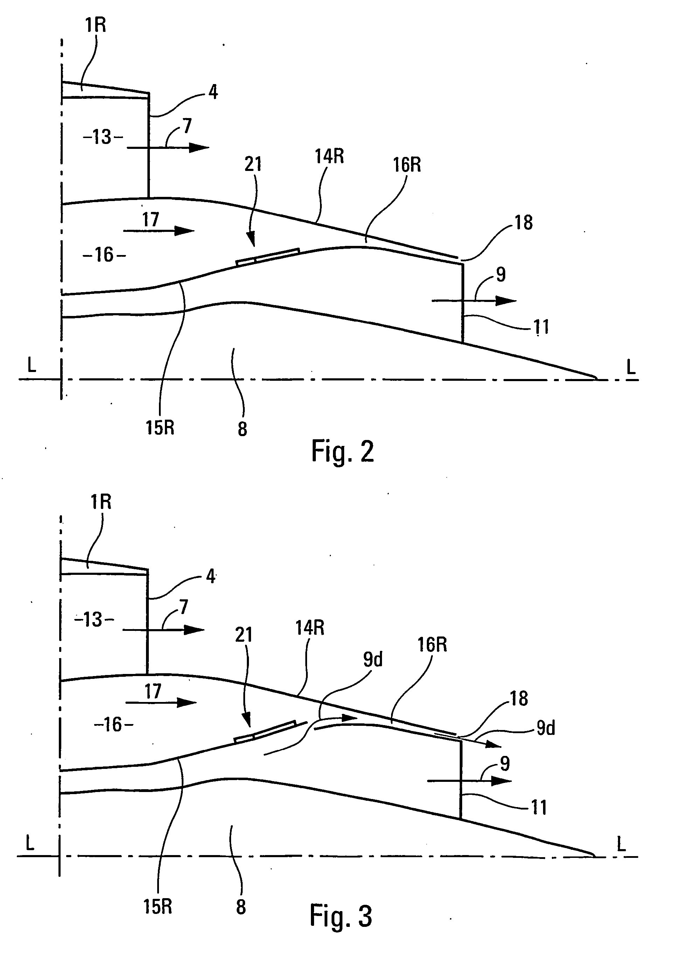

Comme mentionné ci-dessus, l'objet de la présente invention est de supprimer ces échancrures traversantes et, pour ce faire, de modifier la partie arrière 16R de la chambre intermédiaire 16 de la façon illustrée schématiquement par les figures 2 à 7.

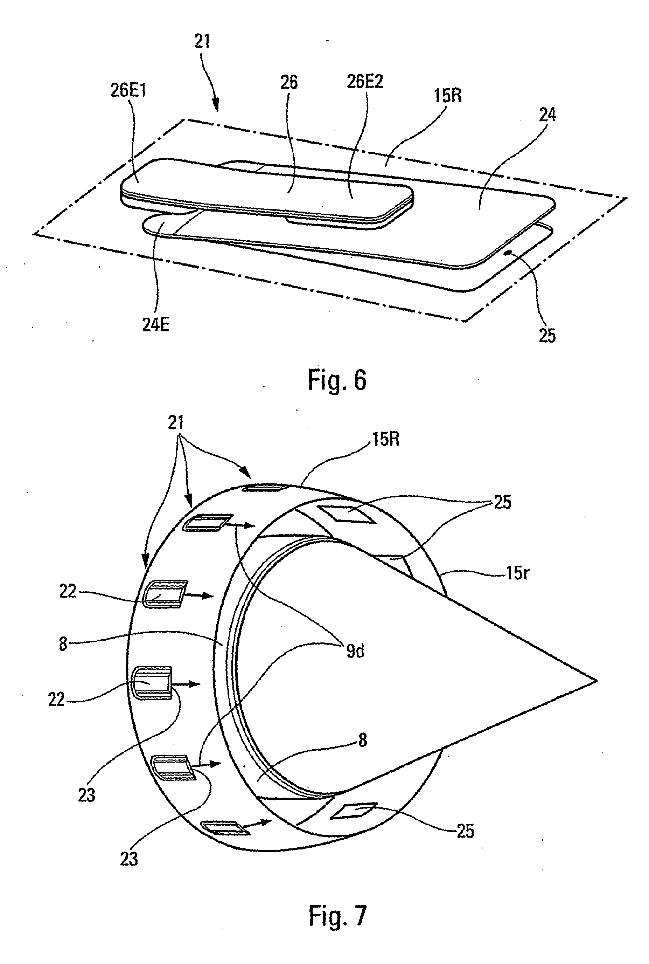

Comme le montrent ces figures, à la périphérie de la partie arrière 15R du capot de moteur 15 et du côté de la chambre intermédiaire 16, sont agencées et réparties une pluralité de trappes 21. On notera que, sur la figure 7, chaque trappe 21 est protégée, du côté de la chambre intermédiaire 16, par un carter 22, pourvu d'une ouverture 23 dirigée vers l'arrière du turbomoteur.

Chaque trappe 21 comporte une lame élastique 24 apte à obturer une ouverture 25, pratiquée dans ladite partie arrière 15R du capot de moteur 15 (voir la figure 6). Le long d'un bord de ladite ouverture 25, une extrémité 24E de ladite lame élastique 24 est solidarisée, par exemple par soudure, de ladite partie arrière 15R. De plus, un système de bilame 26 est solidaire, à l'une de ses extrémités 26E1, de ladite partie arrière 15R et, à son autre extrémité 26E2, de ladite lame élastique 24. Le système de bilame 26 est prévu pour ne se déformer que lorsque la température atteinte par le flux chaud 9 correspond à un régime du turbomoteur supérieur à un seuil au moins égal au régime de croisière, ledit seuil correspondant par exemple au régime du décollage ou à un régime élevé apte à compenser la panne d'au moins un autre turbomoteur de l'aéronef.

Ainsi, pour tout régime du turbomoteur inférieur audit seuil, le système de bilame 26 n'est pas déformé et la lame 24 obture l'ouverture 25 (voir la figure 2).

En revanche, pour un régime du turbomoteur supérieur audit seuil, le système de bilame 26 se déforme et la lame 24 est écartée de la partie arrière 15R. La trappe 21 s'ouvre donc (voir les figures 3, 5 et 6). Il en résulte alors que ladite trappe 21 prélève, sur le flux chaud 9, un jet d'air chaud 9d traversant l'ouverture 23 du carter 22, puis passant dans la chambre intermédiaire 16 avant d'être évacué à l'extérieur à travers au moins des parties de la fente 18.

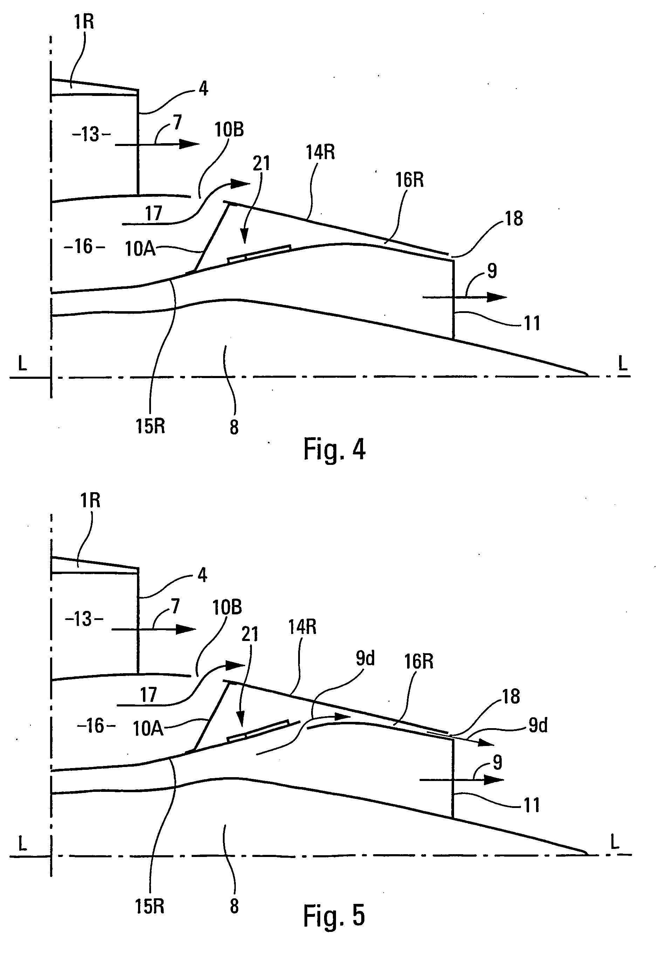

Dans le mode de réalisation des figures 2 et 3, les jets d'air chaud 9d sortent de la chambre intermédiaire 16, en commun avec l'air de ventilation 17, à travers la fente 18. En revanche, dans le mode de réalisation des figures 4 et 5, on a prévu, en avant des trappes 21, d'une part une cloison 10A à l'intérieur de la chambre intermédiaire 16 et, d'autre part, des ouvertures 10B dans le capot interne de soufflante 14. Ainsi, l'air de ventilation 17 peut s'échapper à travers les ouvertures 10B, alors que les jets d'air chaud 9d sont seuls à s'échapper à travers au moins des parties de la fente 18.

Si, comme cela est illustré sur les figures 2 à 5, le bord de l'orifice de sortie 11 du flux chaud 9 est lisse (c'est-à-dire non pourvu des échancrures traversantes 20 de la figure 1), le turbomoteur de l'invention se comporte, au point de vue du bruit de jet et au-dessous dudit seuil de régime, comme un turbomoteur connu non muni de chevrons. En revanche, au-dessus dudit seuil, il atténue le bruit de jet comme un turbomoteur muni de chevrons, bien que n'en comportant pas, du fait que chaque jet d'air chaud 9d prélevé par chaque trappe 21 engendre, à l'arrière dudit turbomoteur, des turbulences semblables à celles produites par lesdites échancrures 20.

Bien entendu, bien que sur la figure 7 on ait représenté les jets d'air chaud 9d comme étant parallèles à la direction axiale L-L, l'orientation desdits jets pourrait être différente, inclinée par rapport au bord de l'orifice de sortie 11 et non pas orthogonale comme représenté.

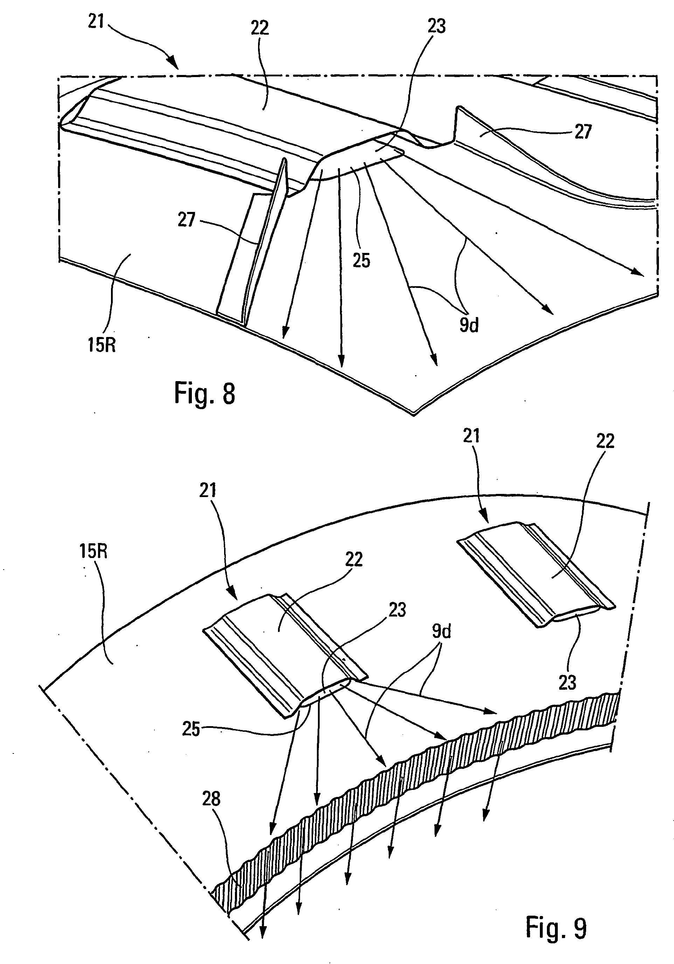

De plus, comme l'illustrent les figures 8 et 9, en arrière desdites trappes 21, on peut prévoir des moyens de guidage 27, 28 pour orienter lesdits jets d'air chaud 9d par rapport au bord de l'orifice 11 de sortie du gaz chaud 9. Ces moyens de guidage peuvent être des parois 27, des obstacles rainurés 28 ou organes analogues, formant avec la partie arrière 14R du capot de soufflante 14 (non représentée sur ces figures) des canaux d'orientation.

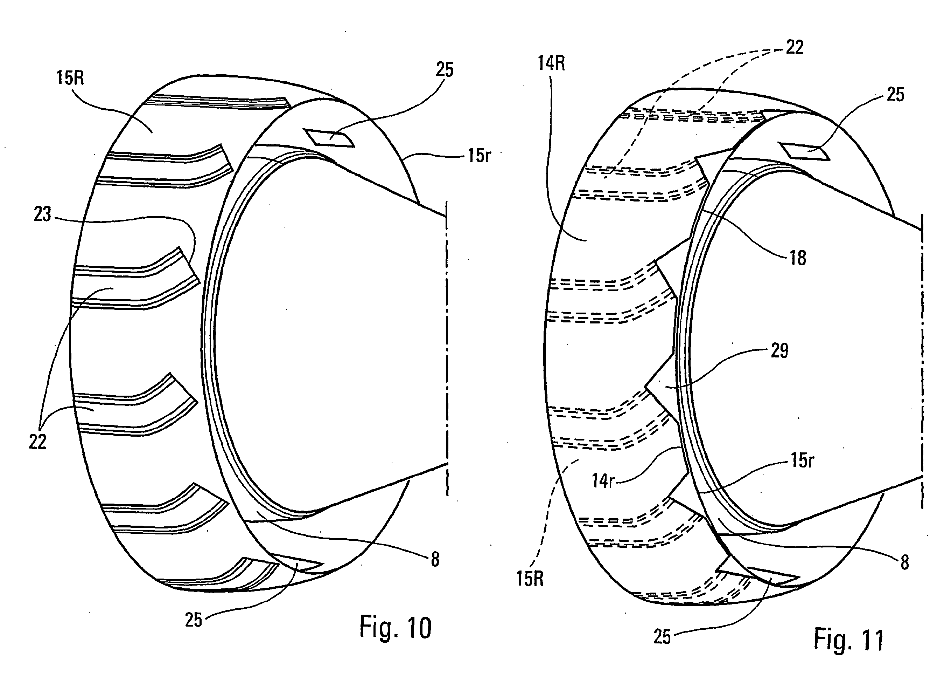

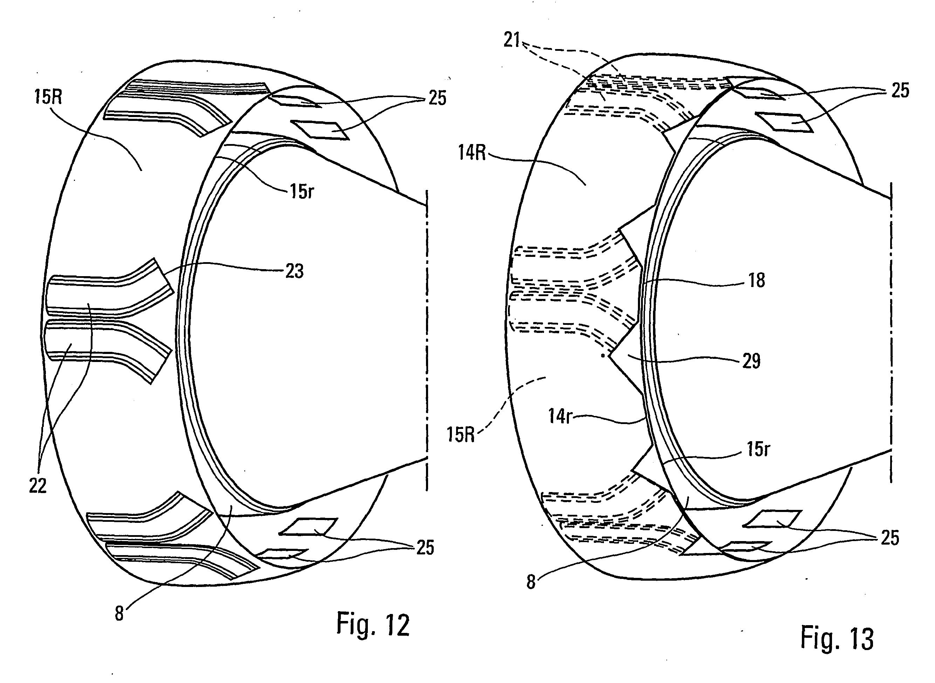

Dans les modes de réalisation des figures 10, 11 et 12, 13, les moyens de guidage des jets d'air chaud 9d sont constitués par les carters 22, conformés à cet effet.

Par ailleurs, dans ces derniers modes de réalisation, le bord arrière 15r de la partie arrière 15R est lisse alors que le bord arrière 14r de la partie arrière 14R est entaillé par des échancrures 29 de forme triangulaire et l'ouverture 23 de chaque carter 22 débouche dans une échancrure 29 à travers un bord latéral de cette dernière. Ainsi, dans ce cas, les jets d'air chaud 9d quittent la partie arrière 16R de la chambre intermédiaire 16 principalement par les échancrures 29 débouchant dans la fente 18.

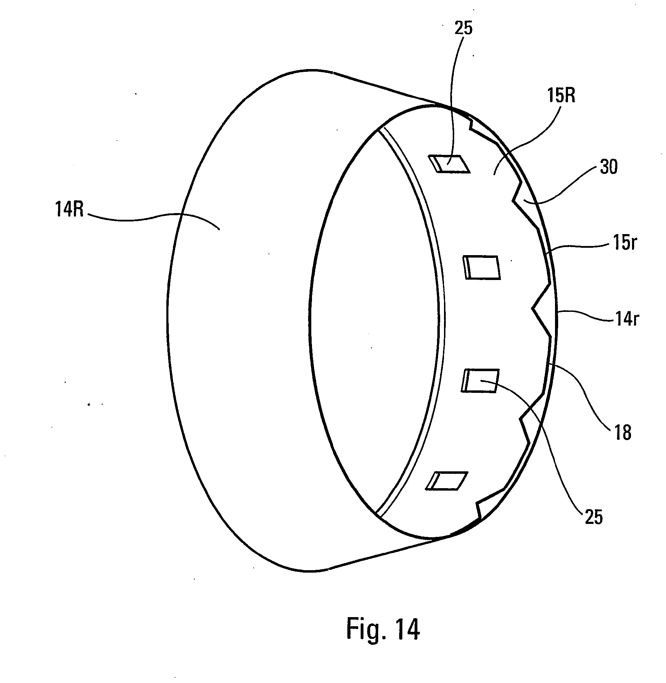

Dans la variante de la figure 14, le bord arrière 14r est lisse et, au contraire, le bord arrière 15r de la partie arrière 15R est entaillée par des échancrures 30, dans lesquelles débouchent lesdits carters 22, de manière semblable à ce qui a été indiqué ci-dessus. Aussi, dans ce mode de réalisation, les jets d'air chaud 9d quittent la partie arrière 16R de la chambre intermédiaire 16 principalement par les échancrures 30 débouchant dans la fente 18.

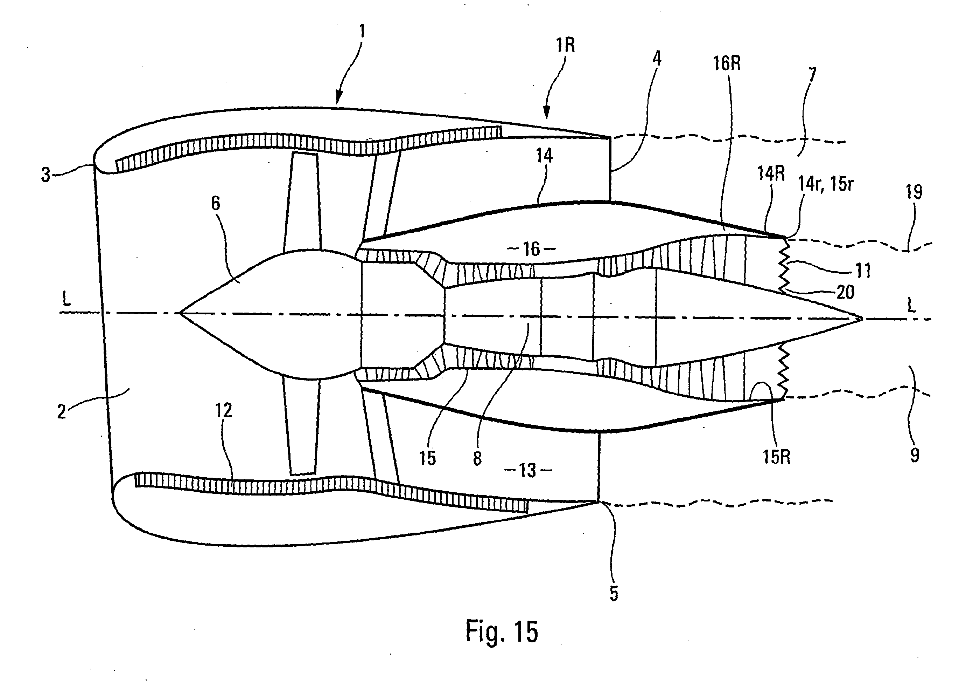

Sur la figure 15, on a représenté un turbomoteur connu, semblable au turbomoteur de la figure 1, sauf en ce qui concerne la partie arrière 1 6R de la chambre intermédiaire 16. Dans ce cas, les bords arrière 14r et 15r sont jointifs et ne ménagent pas entre eux la fente 18.

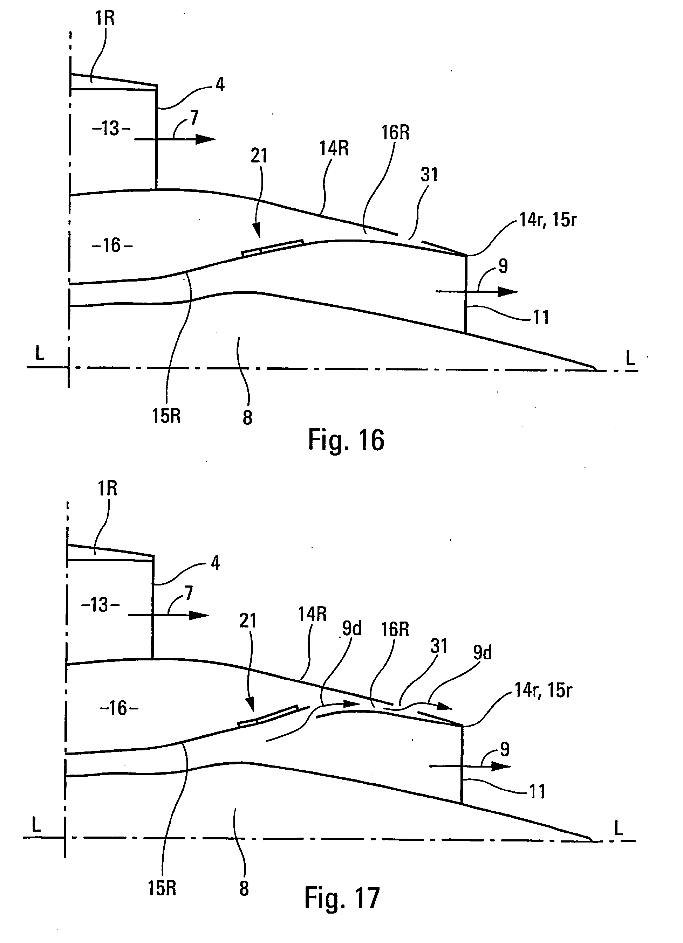

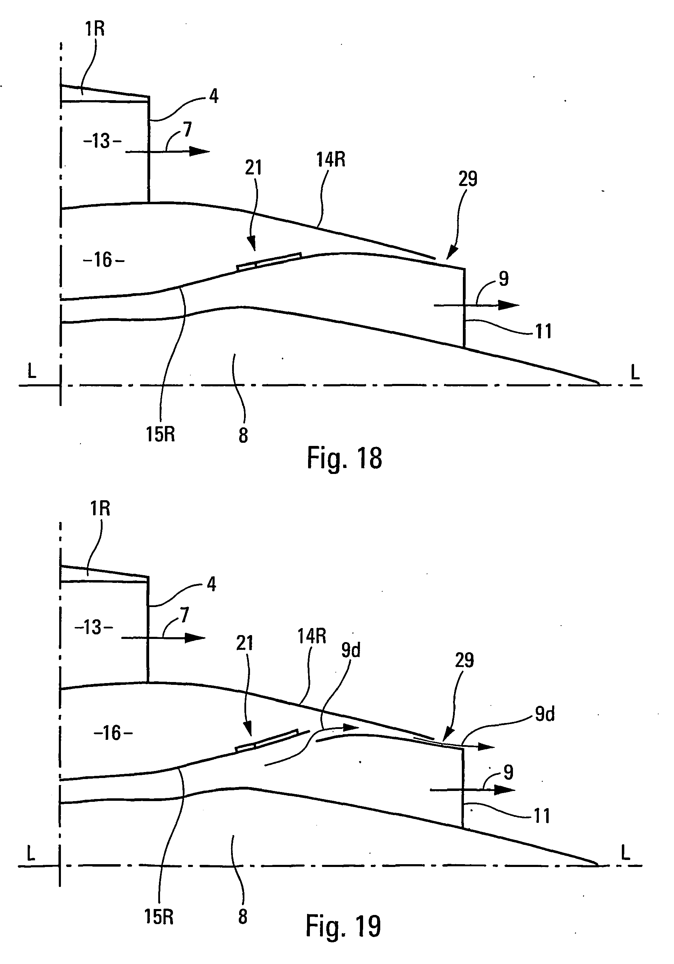

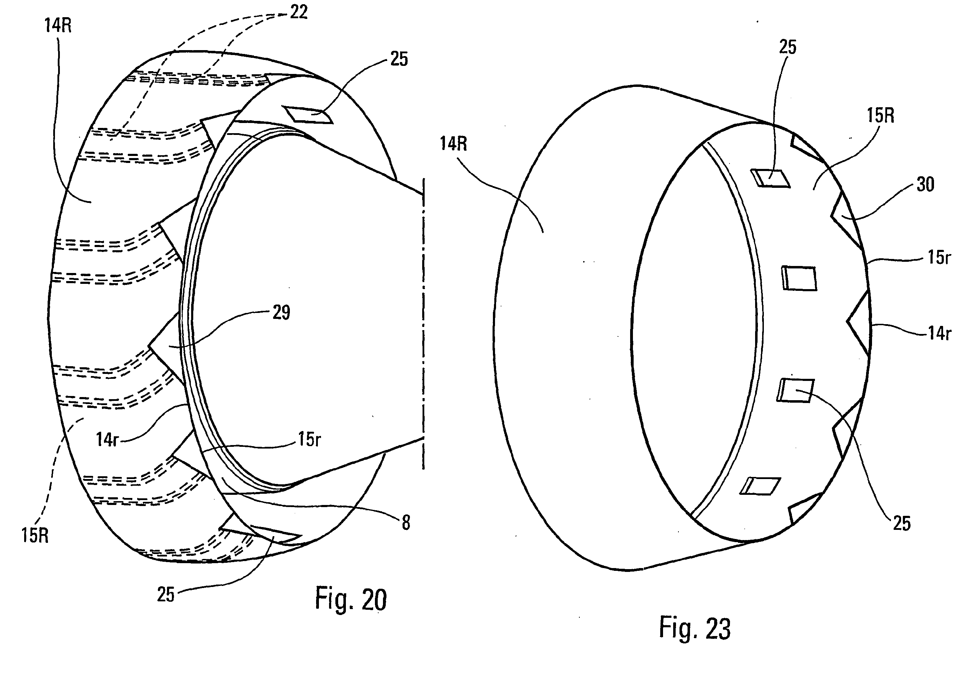

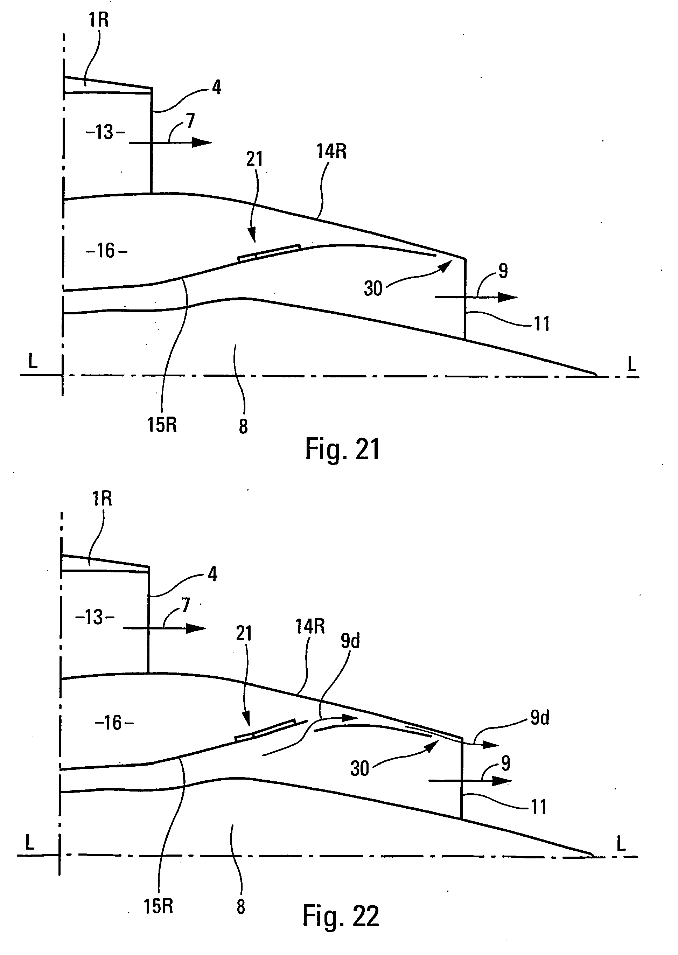

Par suite, pour l'échappement à l'extérieur des jets d'air chaud 9d en vue de la formation des turbulences aptes à atténuer le bruit de jet dudit turbomoteur, on peut :
- comme illustré par les figures 16 et 17, pratiquer des ouvertures 31 dans le capot interne de soufflante 14, au voisinage de l'orifice de sortie 11 du flux chaud 9 ;
- comme illustré par les figures 18, 19 et 20, pratiquer des échancrures 29 dans le seul bord arrière 14r, le bord arrière 15r restant lisse ; ou
- comme illustré par les figures 21, 22 et 23, pratiquer des échancrures 30 dans le seul bord arrière 14r, le bord arrière 14r restant lisse.

Ainsi, dans les modes de réalisation des figures 16 à 23, les ouvertures 31 et les échancrures 29 et 30 servent spécifiquement au passage des jets d'air chaud 9d.

## Revendications

1. Turbomoteur à double flux pour aéronef, comportant :
- une nacelle creuse (1) présentant un axe longitudinal (L-L) et comportant, à l'avant, une entrée d'air (2) et, à l'arrière, une sortie d'air (4) ;
- une soufflante (6) disposée axialement dans ladite nacelle (1) en regard de ladite entrée d'air (2) et apte à engendrer le flux froid (7) dudit turbomoteur ;
- un générateur (8) disposé axialement dans ladite nacelle (1), en arrière de ladite soufflante (6), ledit générateur étant apte à engendrer le flux chaud axial (9) dudit turbomoteur entouré par ledit flux froid (7) et étant enfermé dans un capot de moteur (15) ; et
- un capot interne de canal de soufflante (14) entourant coaxialement ledit générateur de flux chaud (8), de façon :
■ à délimiter avec la nacelle (1) un canal à section annulaire (13) pour ledit flux froid (7), canal qui se termine par ladite sortie d'air (4) de la nacelle (1) ;
■ à délimiter avec ledit capot de moteur (15) une chambre intermédiaire (16) à section annulaire ; et
■ à converger par sa partie arrière (14R) avec la partie arrière (15R) dudit capot de moteur (15) pour que les bords arrière respectifs (14r et 15r) de ces parties arrière forment le bord de l'orifice de sortie (11) dudit flux chaud (9) à la partie arrière (16R) de ladite chambre intermédiaire (16),
**caractérisé :**
- **en ce que**, dans ladite partie arrière (16R) de ladite chambre intermédiaire (16), sont prévus des moyens de communication (18, 29, 30, 31) disposés autour dudit axe longitudinal (L-L) et aptes à mettre ladite chambre intermédiaire (16) en communication avec l'extérieur, au voisinage de la frontière (19) entre ledit flux froid (7) et ledit flux chaud (9) ;
- **en ce que** sont prévues une pluralité de trappes (21) agencées dans ladite partie arrière (15R) du capot de moteur (15), en étant réparties à la périphérie de cette dernière partie arrière (15R) ;
- **en ce que** lesdites trappes (21) sont telles qu'elles sont adaptées à n'être ouverte que lorsque le régime dudit turbomoteur est supérieur à un seuil correspondant au moins au régime de croisière de l'aéronef ; et
- **en ce que**, en position ouverte, lesdites trappes (21) prélèvent, sur ledit flux chaud (9), des jets d'air chaud individuels (9d) passant dans ladite chambre intermédiaire (16) avant de sortir de celle-ci à travers lesdits moyens de communication (18, 29, 30, 31) en étant répartis autour dudit axe longitudinal (L-L).

2. Turbomoteur selon la revendication 1,
**caractérisé en ce que** lesdits moyens de communication (18, 29, 30, 31) comportent une pluralité d'ouvertures de communication individuelles (29, 30, 31) réparties à la périphérie de ladite partie arrière (16R) de la chambre intermédiaire (16).

3. Turbomoteur selon l'une des revendication 1 ou 2, dans lequel, à la périphérie dudit orifice de sortie (11) du flux chaud (9), un seul desdits bords arrière (14r, 15r) dudit capot interne de canal de soufflante (14) ou dudit capot de moteur (15) est entaillé par des échancrures (29, 30) aptes à atténuer le bruit de jet dudit turbomoteur,
**caractérisé en ce que** lesdites échancrures (29, 30) constituent au moins en partie lesdits moyens de communication.

4. Turbomoteur selon la revendication 3, dans lequel chaque échancrure (29, 30) présente la forme au moins approximative d'un triangle,
**caractérisé en ce qu'**un jet d'air chaud individuel (9d) débouche dans l'échancrure (29, 30) correspondante à travers un bord latéral de ladite échancrure.

5. Turbomoteur selon l'une des revendications 1 à 4, dans lequel lesdits bords arrière (14r, 15r) dudit capot interne de canal de soufflante (14) et dudit capot de moteur (15) ménagent entre eux une fente (18),
**caractérisé en ce qu'**au moins des parties de ladite fente (18) constituent au moins en partie lesdits moyens de communication.

6. Turbomoteur selon l'une des revendications 1 à 5,
**caractérisé en ce que** ledit seuil est tel que lesdites trappes (21) sont ouvertes au décollage de l'aéronef.

7. Turbomoteur selon l'une des revendications 1 à 5, pour un aéronef comportant une pluralité de tels turbomoteurs,
**caractérisé en ce que** ledit seuil est tel que lesdites trappes (21) sont ouvertes pour le régime que doivent prendre, en cas de panne d'au moins l'un desdits turbomoteurs, ceux desdits turbomoteurs qui sont en état de fonctionner.

8. Turbomoteur selon l'une des revendications 1 à 7,
**caractérisé en ce que**, à chaque trappe (21), est associé un système de fermeture et d'ouverture (26) sensible à la valeur d'une grandeur physique caractérisant l'état dudit flux chaud (9).

9. Turbomoteur selon la revendication 8,
**caractérisé en ce que** chaque système de fermeture et d'ouverture (26) de trappe (21) comporte un bilame.

10. Turbomoteur selon la revendication 9,
**caractérisé en ce que** chaque trappe (21) comporte une lame élastique (24) apte à coopérer avec une ouverture (25) pratiquée dans ladite partie arrière (15R) dudit capot de moteur (15), **en ce que** ladite lame élastique (24) est solidarisée de ladite partie arrière (15R) le long d'un bord de ladite ouverture (25) et **en ce que** ledit système à bilame (26) est solidaire, d'un côté, de ladite partie arrière (15R) et, de l'autre côté, de ladite lame élastique (24).

11. Turbomoteur selon l'une des revendications 1 à 10,
**caractérisé en ce que** lesdites trappes (21) s'ouvrent en direction de ladite chambre intermédiaire (16).

12. Turbomoteur selon l'une des revendications 8 à 11,
**caractérisé en ce que** ledit système de fermeture et d'ouverture (26) de chaque trappe (21) se trouve du côté de ladite chambre intermédiaire (16).

13. Turbomoteur selon l'une des revendications 1 à 12,
**caractérisé en ce que**, du côté de ladite chambre intermédiaire (16), chaque trappe (21) est protégée par un carter (22) ouvert vers l'arrière.

14. Turbomoteur selon l'une des revendications 1 à 13,
**caractérisé en ce que**, en arrière desdites trappes (21), sont prévus des moyens (22, 27, 28) pour le guidage desdits jets d'air chaud (9d).

15. Turbomoteur selon l'une des revendications 13 et 14,
**caractérisé en ce que** lesdits moyens de guidage sont constitués par lesdits carters de protection (22).

## Claims

1. A turbofan turbine engine for an aircraft, comprising:
- a hollow nacelle (1) having a longitudinal axis (L-L) and comprising, at the front, an air inlet (2) and, at the rear, an air outlet (4);
- a fan (6) placed axially in said nacelle (1) opposite said air inlet (2) and capable of generating the cold flow (7) of said turbine engine;
- a generator (8) placed axially in said nacelle (1), behind said fan (6), said generator being capable of generating the axial hot flow (9) of said turbine engine surrounded by said cold flow (7) and being enclosed in an engine cowl (15) ; and
- a fan channel inner cowl (14) coaxially surrounding said hot flow generator (8) so as:
• to delimit with the nacelle (1) a channel (13) of annular section for said cold flow (7), a channel that terminates in said air outlet (4) of the nacelle (1) ;
• to delimit with said engine cowl (15) an intermediate chamber (16) of annular section; and
• to converge via its rear portion (14R) with the rear portion (15R) of said engine cowl (15) so that the respective rear edges (14r and 15r) of these rear portions form the edge of the outlet orifice (11) of said hot flow (9) at the rear portion (16R) of said intermediate chamber (16),
**characterized:**
- **in that**, provided in the rear portion (16R) of said intermediate chamber (16), are communication means (18, 29, 30, 31) placed about said longitudinal axis (L-L) and capable of placing said intermediate chamber (16) in communication with the outside, in the vicinity of the boundary (19) between said cold flow (7) and said hot flow (9);
- **in that** a plurality of hatches (21) are provided that are arranged in said rear portion (15R) of the engine cowl (15), while being distributed on the periphery of the latter rear portion (15R);
- **in that** said hatches (21) are such that they are adapted to be open only when the speed of said turbine engine is greater than a threshold corresponding to at least the cruising speed of the aircraft; and
- **in that**, in the open position, said hatches (21) draw off, from said hot flow (9), individual jets of hot air (9d) flowing into said intermediate chamber (16) before leaving the latter through said communication means (18, 29, 30, 31) while being distributed about said longitudinal axis (L-L).

2. The turbine engine as claimed in claim 1, **characterized in that** said communication means (18, 29, 30, 31) comprise a plurality of individual communication openings (29, 30, 31) distributed on the periphery of said rear portion (16R) of the intermediate chamber (16).

3. The turbine engine as claimed in one of claims 1 or 2, in which, on the periphery of said outlet orifice (11) of the hot flow (9), only one of said rear edges (14r, 15r) of said fan channel inner cowl (14) or of said engine cowl (15) is notched by recesses (29, 30) capable of attenuating the jet noise of said turbine engine, **characterized in that** said recesses (29, 30) form at least in part said communication means.

4. The turbine engine as claimed in claim 3, in which each recess (29, 30) has at least the approximate shape of a triangle, **characterized in that** an individual jet of hot air (9d) flows out in the corresponding recess (29, 30) through a side edge of said recess.

5. The turbine engine as claimed in one of claims 1 to 4, in which said rear edges (14r, 15r) of said fan channel inner cowl (14) and of said engine cowl (15) arrange between them a slot (18), **characterized in that** at least portions of said slot (18) form at least in part said communication means.

6. The turbine engine as claimed in one of claims 1 to 5, **characterized in that** said threshold is such that said hatches (21) are opened on take-off of the aircraft.

7. The turbine engine as claimed in one of claims 1 to 5, for an aircraft comprising a plurality of such turbine engines, **characterized in that** said threshold is such that said hatches (21) are opened for the speed that must be adopted, in the case of a failure of at least one of said turbine engines, by those of said turbine engines that are in working order.

8. The turbine engine as claimed in one of claims 1 to 7, **characterized in that** with each hatch (21) is associated a closing and opening system (26) sensitive to the value of a physical magnitude characterizing the state of said hot flow (9).

9. The turbine engine as claimed in claim 8, **characterized in that** each closing and opening system (26) of a hatch (21) comprises a bimetallic strip.

10. The turbine engine as claimed in claim 9, **characterized in that** each hatch (21) comprises an elastic strip (24) capable of interacting with an opening (25) made in said rear portion (15R) of said engine cowl (15), **in that** said elastic strip (24) is fixedly attached to said rear portion (15R) along an edge of said opening (25) and **in that** said bimetallic strip system (26) is fixedly attached, on one side, to said rear portion (15R) and, on the other side, to said elastic strip (24).

11. The turbine engine as claimed in one of claims 1 to 10, **characterized in that** said hatches (21) are opened in the direction of said intermediate chamber (16).

12. The turbine engine as claimed in one of claims 8 to 11, **characterized in that** said system (26) for closing and opening each hatch (21) is on the side of said intermediate chamber (16).

13. The turbine engine as claimed in one of claims 1 to 12, **characterized in that**, on the side of said intermediate chamber (16), each hatch (21) is protected by a rearward-opening casing (22).

14. The turbine engine as claimed in one of claims 1 to 13, **characterized in that**, provided behind said hatches (21) are means (22, 27, 28) for the guidance of said jets of hot air (9d).

15. The turbine engine as claimed in one of claims 13 and 14, **characterized in that** said guidance means consist of said protective casings (22).

## Patentansprüche

1. Zweistrom-Strahltriebwerk für Flugzeuge, das Folgendes umfasst:
- eine konkave Triebwerksgondel (1) mit einer Längsachse (L-L) und vorne einem Lufteinlass (2) und hinten einem Luftauslass (4);
- eine Turbine (6), die axial in der erwähnten Gondel (1) gegenüber dem erwähnten Lufteinlass (2) angeordnet ist und den Kaltstrom (7) des erwähnten Strahltriebwerks erzeugen kann;
- einen Generator (8), der axial in der erwähnten Gondel (1), hinter der erwähnten Turbine (6), angeordnet ist, wobei der erwähnte Generator geeignet ist, den axialen Heißstrom (9) des erwähnten Strahltriebwerks zu erzeugen, welcher durch den erwähnten Kaltstrom (7) umgeben und in eine Triebwerksverkleidung (15) eingeschlossen ist; und
- eine innere Verkleidung des Turbinenkanals (14), die den erwähnten Heißstromgenerator (8) koaxial so umgibt,
• dass mit der Triebwerksgondel (1) ein Kanal mit ringförmigem Querschnitt (13) für den erwähnten Kaltstrom (7) abgegrenzt wird, wobei dieser Kanal durch den erwähnten Luftauslass (4) der Triebwerksgondel (1) beendet wird;
• dass mit der erwähnten Triebwerksverkleidung (15) eine Zwischenkammer (16) mit ringförmigem Querschnitt abgegrenzt wird; und
• dass dieser mit seinem hinteren Teil (14R) konvergent mit dem hinteren Teil (15R) der erwähnten Triebwerksverkleidung (15) verläuft, damit die jeweiligen hinteren Ränder (14r und 15r) dieser hinteren Teile den Rand der Auslassöffnung (11) des erwähnten Heißstroms (9) am hinteren Teil (16R) der erwähnten Zwischenkammer (16) bilden,
**dadurch gekennzeichnet,**
- **dass** im erwähnten hinteren Teil (16R) der erwähnten Kammer (16) Verbindungsmittel (18, 29, 30, 31) vorgesehen sind, welche um die erwähnte Längsachse (L-L) angeordnet und geeignet sind, die erwähnte Zwischenkammer (16) mit der Außenseite in Verbindung zu bringen, und zwar nahe der Grenze (19) zwischen dem erwähnten Kaltstrom (7) und dem erwähnten Heißstrom (9);
- **dass** eine Vielzahl von Klappen (21) vorgesehen sind, die im erwähnten hinteren Teil (15R) der Triebwerksverkleidung (15) angeordnet und über den Umfang dieses hinteren Teils (15R) verteilt sind;
- **dass** die erwähnten Klappen (21) so konzipiert sind, dass sie nur geöffnet werden, wenn die Drehzahl des erwähnten Strahltriebwerks über einer Schwelle liegt, die zumindest der Reiseflugdrehzahl des Flugzeugs entspricht; und
- **dass** die erwähnten Klappen (21), in geöffneter Stellung, aus dem erwähnten Heißstrom (9) individuelle Strahlen heißer Luft (9d) entnehmen, die die erwähnte Zwischenkammer (16) passieren, bevor sie diese über die erwähnten Verbindungsmittel (18, 29, 30, 31) verlassen, wobei sie rund um die erwähnte Längsachse (L-L) verteilt werden.

2. Strahltriebwerk nach Anspruch 1,
**dadurch gekennzeichnet, dass** die erwähnten Verbindungsmittel (18, 29, 30, 31) eine Vielzahl von individuellen Verbindungsöffnungen (29, 30, 31) umfassen, welche über den Umfang des erwähnten hinteren Teils (16R) der Zwischenkammer (16) verteilt sind.

3. Strahltriebwerk nach einem der Ansprüche 1 oder 2, in dem, über den Umfang der erwähnten Auslassöffnung (11) des Heißstroms (9), in einen einzigen der erwähnten hinteren Ränder (14r, 15r) der erwähnten inneren Verkleidung des Turbinenkanals (14) oder der erwähnten Triebswerksverkleidung (15) Schlitze (29, 30) geschnitten sind, die geeignet sind, den Strahllärm des erwähnten Strahltriebwerks zu dämpfen,
**dadurch gekennzeichnet, dass** die erwähnten Schlitze (29, 30) zumindest zum Teil die erwähnten Verbindungsmittel darstellen.

4. Strahltriebwerk nach Anspruch 3, in dem jeder Schlitz (29, 30) die zumindest annähernde Form eines Dreiecks aufweist,
**dadurch gekennzeichnet, dass** ein individueller Strahl heißer Luft (9d) über einen Seitenrand des erwähnten Schlitzes in den entsprechenden Schlitz (29, 30) mündet.

5. Strahltriebwerk nach einem der Ansprüche 1 bis 4, in dem die erwähnten hinteren Ränder (14r, 15r) der erwähnten inneren Verkleidung des Turbinenkanals (14) und der erwähnten Triebwerksverkleidung (15) zwischen einander einen Schlitz (18) freihalten,
**dadurch gekennzeichnet, dass** zumindest Teile des erwähnten Schlitzes (18) zumindest teilweise die erwähnten Verbindungsmittel darstellen.

6. Strahltriebwerk nach einem der Ansprüche 1 bis 5,
**dadurch gekennzeichnet, dass** die erwähnte Schwelle dergestalt ist, dass die erwähnten Klappen (21) beim Start des Flugzeugs geöffnet sind.

7. Strahltriebwerk nach einem der Ansprüche 1 bis 5, für ein Flugzeug mit einer Vielzahl solcher Strahltriebwerke,
**dadurch gekennzeichnet, dass** die erwähnte Schwelle dergestalt ist, dass die erwähnten Klappen (21) für jene Drehzahl geöffnet sind, mit der, im Fall eines Defekts mindestens eines der erwähnten Strahltriebwerke, diejenigen der erwähnten Strahltriebwerke, die funktionieren, betrieben werden müssen.

8. Strahltriebwerk nach einem der Ansprüche 1 bis 7,
**dadurch gekennzeichnet, dass** mit jeder Klappe (21) ein Schließ- und Öffnungssystem (26) verbunden ist, das auf den Wert einer physikalischen Größe anspricht, die den Zustand des erwähnten Heißstroms (9) kennzeichnet.

9. Strahltriebwerk nach Anspruch 8,
**dadurch gekennzeichnet, dass** jedes Schließ- und Öffnungssystem (26) einer Klappe (21) ein Bimetallelement umfasst.

10. Strahltriebwerk nach Anspruch 9,
**dadurch gekennzeichnet, dass** jede Klappe (21) einen elastischen Streifen (24) umfasst, welcher geeignet ist, mit einer Öffnung (25) im erwähnten hinteren Teil (15R) der erwähnten Triebwerksverkleidung (15) zusammenzuwirken, dass der erwähnte elastische Streifen (24) mit dem erwähnten hinteren Teil (15R) entlang eines Rands der erwähnten Öffnung (25) verbunden ist und dass das erwähnte System mit Bimetallelement (26) auf einer Seite mit dem erwähnten hinteren Teil (15R) und auf der anderen Seite mit dem erwähnten Streifen (24) verbunden ist.

11. Strahltriebwerk nach einem der Ansprüche 1 bis 10,
**dadurch gekennzeichnet, dass** die erwähnten Klappen (21) sich in Richtung der erwähnten Zwischenkammer (16) öffnen.

12. Strahltriebwerk nach einem der Ansprüche 8 bis 11,
**dadurch gekennzeichnet, dass** das erwähnte Schließ- und Öffnungssystem (26) jeder Klappe (21) sich an der Seite der erwähnten Zwischenkammer (16) befindet.

13. Strahltriebwerk nach einem der Ansprüche 1 bis 12,
**dadurch gekennzeichnet, dass** jede Klappe (21) auf der Seite der erwähnten Zwischenkammer (16) durch ein nach hinten geöffnetes Gehäuse (22) geschützt ist.

14. Strahltriebwerk nach einem der Ansprüche 1 bis 13,
**dadurch gekennzeichnet, dass** hinter den erwähnten Klappen (21) Mittel (22, 27, 28) zur Führung der erwähnten Strahlen heißer Luft (9d) vorgesehen sind.

15. Strahltriebwerk nach einem der Ansprüche 13 und 14,
**dadurch gekennzeichnet, dass** die erwähnten Führungsmittel durch die erwähnten Schutzgehäuse (22) gebildet sind.
